Europäisches Patentamt

European Patent Office

Office européen des brevets

(19)

(11) Veröffentlichungsnummer : **0 115 880**
**B1**

(12) **EUROPÄISCHE PATENTSCHRIFT**

(45) Veröffentlichungstag der Patentschrift :
07.05.86

(51) Int. Cl.⁴ : **C 01 B 17/765, C 01 B 17/56**

(21) Anmeldenummer : **84200006.9**

(22) Anmeldetag : **05.01.84**

(54) **Verfahren zur Herstellung von Schwefelsäure.**

(30) Priorität : **01.02.83 DE 3303287**

(43) Veröffentlichungstag der Anmeldung :
**15.08.84 Patentblatt 84/33**

(45) Bekanntmachung des Hinweises auf die Patenterteilung : **07.05.86 Patentblatt 86/19**

(84) Benannte Vertragsstaaten :
**BE DE FR GB IT NL**

(56) Entgegenhaltungen :
**DE-A- 1 792 573**
**DE-A- 2 905 083**
**DE-C-   878 940**
**FR-A- 2 303 585**
**FR-A- 2 316 186**
**FR-A- 2 316 187**
**GB-A-   552 146**
**GB-A-   852 073**

(73) Patentinhaber : **METALLGESELLSCHAFT AG**
**Reuterweg 14 Postfach 3724**
**D-6000 Frankfurt/M.1 (DE)**

**BAYER AG**
**Konzernverwaltung RP Patentabteilung**
**D-5090 Leverkusen 1 Bayerwerk (DE)**

(72) Erfinder : **Dörr, Karl-Heinz**
**Am Gonzenheimer Spiess 6**
**D-6500 Mainz (DE)**
Erfinder : **Grimm, Hugo**
**Sudetenstrasse 37**
**D-8760 Miltenberg (DE)**
Erfinder : **Gerken, Rudolf, Dr.**
**Rather Strasse 79**
**D-4150 Krefeld-Traar (DE)**
Erfinder : **Lailach, Günter, Dr.**
**Bodelschwinghstrasse 23**
**D-4150 Krefeld (DE)**

(74) Vertreter : **Fischer, Ernst, Dr.**
**Reuterweg 14**
**D-6000 Frankfurt am Main 1 (DE)**

EP 0 115 880 B1

**Beschreibung**

Die Erfindung betrifft ein Verfahren zur Herstellung von Schwefelsäure aus SO$_2$-haltigen Gasen nach einer Naßwäsche durch mehrstufige, katalytische Umsetzung von SO$_2$ zu SO$_3$, Zwischenabsorption des gebildeten SO$_3$ nach einer Kontaktstufe, Endabsorption des gebildeten SO$_3$ nach der letzten Kontaktstufe, wobei die feuchten SO$_2$-haltigen Gase mit einem maximal der Wasserbilanz entsprechenden Wassergehalt vor dem Einsatz in die erste Kontaktstufe mit konzentrierter Schwefelsäure getrocknet werden, das von der Trocknersäure absorbierte der SO$_3$-Absorption überführt und eine entsprechende Menge Absorbersäure in die Trocknung zurückgeführt wird, die Zwischenabsorption als Heißabsorption betrieben wird und überschüssige Wärme aus dem Kontaktsystem verwertet wird.

Bei der Herstellung von Schwefelsäure durch katalytische Umsetzung von SO$_2$ zu SO$_3$ und Absorption des SO$_3$ in Schwefelsäure werden die SO$_2$-haltigen Gase oder die Luft vor dem Einsatz in die Kontaktanlage mit konzentrierter Schwefelsäure getrocknet. Die Trocknersäure nimmt dabei eine dem Wassergehalt der SO$_2$-haltigen Gase oder der Luft entsprechende Menge an Wasser auf und wird verdünnt. Durch teilweisen Austausch der Trocknersäure mit der konzentrierten Säure der SO$_3$-Absorber wird die Konzentration der Trocknersäure konstantgehalten. Zur Erzeugung einer Produktionssäure mit einer gewünschten Schwefelsäurekonzentration muß die Wasserbilanz des Systems eingehalten werden, d. h. die Wasseraufnahme der Trocknersäure darf in Abhängigkeit vom SO$_2$-Gehalt der Gase einen bestimmten Wert nicht überschreiten. Falls die SO$_2$-haltigen Gase oder die Luft mehr Wasser enthalten, wird der überschüssige Wassergehalt vor der Trocknung entfernt. Dazu wird die Temperatur der Gase vor der Trocknung auf einen Wert gesenkt, bei dem das überschüssige Wasser auskondensiert wird und der verbleibende Wassergehalt höchstens der Wasserbilanz entspricht. Die SO$_2$-haltigen Gase oder die Luft, die zur Erzeugung SO$_2$-haltiger Gase durch Verbrennung von Schwefel benutzt wird, die einen der Wasserbilanz entsprechenden Wassergehalt haben, werden in die Trocknung und dann in die Katalyse geleitet. Dabei fallen in den Säurekreisläufen der SO$_3$-Absorber und Trockner sowie in den katalysierten Gasen Wärmemengen an, die zum Teil ein niedriges Temperaturniveau haben. Dies trifft insbesondere für die Wärme in den Säurekreisläufen zu. Im Hinblick auf die hohen Energiekosten wird es immer wichtiger, diese Wärmemengen auszunutzen. Das Problem besteht nun darin, diese beträchtlichen Wärmenengen trotz ihres geringen Temperaturniveaus in möglichst wirtschaftlicher Weise zu verwerten.

Aus den DE - A - 25 29 708 und 25 29 709 ist es bekannt, diese überschüssigen Wärmemengen zur Aufkonzentrierung von verdünnter Schwefelsäure zu benutzen. Dabei wird die verdünnte Schwefelsäure durch indirekten Wärmeaustausch mit heißer Absorbersäure und/oder Trocknersäure aufgeheizt und mit heißem Endgas der Katalyse und/oder inerten wasserarmen Gasen in direkte Berührung gebracht. Die Trocknung der SO$_2$-haltigen Gase und der Luft erfolgt mit konzentrierter Schwefelsäure. Zur Konstanthaltung der Konzentration der Trocknersäure wird ein Teilstrom aus den Trocknersäure-Kreisläufen in die Säurekreisläufe des Zwischenabsorbers und Endabsorbers geleitet und entsprechende Mengen von Absorbersäure aus dem Zwischenabsorber und Endabsorber werden in die Trocknung geleitet. Da der Unterschied in den Konzentrationen zwischen der Absorbersäure und der Trocknersäure gering ist, muß eine große Menge an Verschiebesäure zwischen den Trocknern und SO$_3$-Absorbern hin- und hergeleitet werden. Bei einer Auflauftemperatur der Säure in die Trocknung von 50 bis 70 °C beträgt die entsprechende Ablauftemperatur 60 bis 80 °C. Bei einer Auflauftemperatur in die heiße Zwischenabsorption von 80 bis 160 °C beträgt die entsprechende Ablauftemperatur 100 bis 180 °C. Durch die wesentlich niedrigere Temperatur der Trocknersäure und die große Menge an Verschiebesäure wird die Temperatur der Absorbersäure nach der Mischung beträchtlich herabgesetzt und damit das Temperaturniveau herabgesetzt.

Zur Erzeugung von heller Schwefelsäure aus SO$_2$-haltigen Gasen, die organische Bestandteile enthalten, ist es auch bekannt, zunächst eine Vortrocknung mit verdünnter Schwefelsäure von etwa 50 bis 80 Gew.-% und dann die Nachtrocknung mit konzentrierter Schwefelsäure durchzuführen. Dabei fällt dann eine große Menge an verdünnter, dunkler Schwefelsäure in der Vortrocknung an, die als Produktion abgesetzt werden muß (DE - A - 25 10 241), oder der größte Teil des Wassergehaltes der feuchten Gase wird in die Nachtrocknung getrieben (GB - C - 852 073), oder das SO$_3$-haltige Gas nach der Katalyse wird in zwei Teilströme aufgeteilt, ein Teilstrom wird in einen Absor- ber zur Erzeugung heller Säure und der andere Teilstrom in einen Absorber zur Erzeugung dunkler Säure geleitet (DE - B - 1 792 573). Keines dieser Verfahren gibt einen Hinweis auf eine Ausnutzung der Säurewärme.

Der Erfindung liegt die Aufgabe zugrunde, die Trocknung so durchzuführen, daß im Kontaktsystem eine möglichst große überschüssige Wärmemenge anfällt, die in günstiger Weise ausgenutzt werden kann.

Die Lösung dieser Aufgabe erfolgt erfindungsgemäß dadurch, daß den Gasen vor der Trocknung mit konzentrierter Schwefelsäure in einer Vortrocknung mit verdünnter Schwefelsäure von 40 bis 80 Gew.-% ein Teil ihres Wassergehaltes entzogen wird, mindestens ein Teil des von der Vortrocknersäure aufgenommenen Wassers durch Einleiten von Vortrocknersäure in die Absorbersäure der SO$_3$-Absorption überführt und eine entsprechende Menge Absorbersäure aus der SO$_3$-Absorption in die Vortrocknung zurückgeführt wird.

Die Konzentration der Schwefelsäure im Säurekreislauf des Trockners beträgt etwa 93 bis 98,5 Gew.-%.

2

Im allgemeinen erfolgt eine Zwischenabsorption zwischen einer ersten und einer zweiten Kontaktstufe. Es können aber auch mehrere Zwischenabsorptionen zwischen mehreren Kontaktstufen erfolgen. Aus dem Säurekreislauf der Vortrocknersäure wird als Verschiebesäure ein Teilstrom in die Absorbersäure der $SO_3$-Absorption geleitet. Dabei kann dieser Teilstrom nur in die Zwischenabsorption, in die Zwischen- und Endabsorption oder nur in den Endabsorber geleitet werden. Ein Teil kann auch in die Trocknung geleitet werden. Die Menge der Verschiebesäure wird so geregelt, daß in ihr die Menge an Wasser enthalten ist, die in der Vortrocknung aufgenommen wird. Ein Teil der Vortrocknersäure kann auch als Produktion abgegeben werden, wenn Bedarf für verdünnte Schwefelsäure besteht. Da in diesem Fall ein Teil des in der Vortrocknung aufgenommenen Wassers in der Produktionssäure abgeführt wird, muß die Menge der Verschiebesäure entsprechend verringert werden. Wenn die feuchten, $SO_2$-haltigen Gase eine Wassermenge enthalten, die geringer ist als die Wassermenge, die für die Wasserbilanz erforderlich ist, wird die fehlende Wassermenge durch Zugabe von Wasser in die $SO_3$-Absorbersäure ausgeglichen. Wenn ein Teil der Vortrocknersäure als Produktion abgeführt wird, wird die in dieser Produktionssäure enthaltene, aufgenommene Wassermenge ebenfalls durch Zugabe von Wasser in die $SO_3$-Absorbersäure ausgeglichen. Aus den Säurekreisläufen der $SO_3$-Absorption wird konzentrierte Verschiebesäure in die Vortrocknung zurückgeführt, deren Menge so geregelt wird, daß die Säurekonzentration in der Vortrocknung auf dem vorgegebenen Wert gehalten wird. Das Volumen dieser konzentrierten Verschiebesäure ist gering. Die konzentrierte Verschiebesäure kann auch über die Trocknung in die Vortrocknung erfolgen. Mit abnehmender Konzentration Säure im Kreislauf der Vortrocknung nimmt die erforderliche Menge an rückgeführter, konzentrierter Verschiebesäure ab. Jedoch muß andererseits die Konzentration in der Vortrocknung so hochgehalten werden, daß die gewünschte Vortrocknung erzielt wird. Die Produktion an konzentrierter Säure kann aus der Trocknung oder der $SO_3$-Absorption entnommen werden. Die überschüssige Wärme des Kontaktsystems fällt auf höherem Temperaturniveau im Gas der Kontaktgruppe und in der Säure der $SO_3$-Absorber an. Sie kann für eine Aufkonzentrierung von dünnen Säuren, für eine Wassererwärmung, Dampferzeugung usw. verwendet werden.

Eine vorzugsweise Ausgestaltung besteht darin, daß in der Vortrocknung 50 bis 98 % der im Gas enthaltenen Menge an Wasser entfernt werden. Dadurch werden besonders gute Ergebnisse im Hinblick auf eine hohe Temperatur der Absorbersäure der $SO_3$-Absorber erzielt.

Eine vorzugsweise Ausgestaltung besteht darin, daß die Trocknung mit konzentrierter Schwefelsäure ohne Kühlung des Trocknersäure-Kreislaufes erfolgt. Durch die Einstellung der geringen Wassermenge, die im Trockner absorbiert werden muß, ist ein Betrieb des Trockners ohne Kühlung des Säurekreislaufes möglich. Dadurch ist die Austrittstemperatur des getrockneten Gases aus dem Trockner höher und die überschüssige Wärme im Gas des Kontaktsystems wird größer.

Eine Ausgestaltung besteht darin, daß Verdünnungsluft zwischen der Vortrocknung und der Trocknung eingeleitet wird. Falls bei $SO_2$-haltigen Gasen mit hohem $SO_2$-Gehalt Verdünnungsluft zugemischt werden muß, ergibt die Zumischung an dieser Stelle sehr gute Ergebnisse.

Eine vorzugsweise Ausgestaltung besteht darin, daß die aus der $SO_3$-Absorption zurückgeführte Absorbersäure zunächst ganz oder teilweise in den Säurekreislauf des Trockners eingeleitet wird und aus dem Säurekreislauf des Trockners die in der Vortrocknung erforderliche Säuremenge zurückgeführt wird. Wenn die zurückgeführte, konzentrierte Verschiebesäure ganz in die Trocknung geleitet wird, wird ein Teil der Verschiebesäure des Vortrockners in den Trockner geleitet und dadurch die Konzentration der Säure in der Trocknung konstantgehalten. Durch diese Ausgestaltung erhöht sich die Austrittstemperatur des $SO_2$-haltigen Gases aus der Trocknung um die in der rückgeführten, konzentrierten Verschiebesäure enthaltene Wärmemenge.

Eine vorzugsweise Ausgestaltung besteht darin, daß ein Teilstrom der Vortrocknersäure als Produktionssäure abgeführt wird, und eine der in dem Teilstrom abgeführten Wassermenge entsprechende Menge an Wasser in die Säurekreisläufe der $SO_3$-Absorption zugegeben wird. Wenn ein Bedarf an verdünnter Säure besteht, wird auf diese Weise ein Teil des in der Vortrocknung aufgenommenen Wassers ausgeschleust. Durch den Ersatz der ausgeschleusten Wassermenge durch Wasserzugabe in der $SO_3$-Absorption wird die Menge an konzentrierter, rückgeführter Verschiebesäure geringer, und die Mischwärme bei der Zugabe des Wassers wird auf relativ hohem Temperaturniveau gewonnen.

Eine vorzugsweise Ausgestaltung besteht darin, daß bei einem in Bezug auf die Wasserbilanz zu geringen Wassergehalt der in die Vortrocknung und Trocknung eintretenden Gase die fehlende Menge an Wasser in die Säurekreisläufe der $SO_3$-Absorption zugegeben wird. Dadurch wird die Menge an rückgeführter, konzentrierter Verschiebesäure geringgehalten und die Mischwärme fällt auf relativ hohem Temperaturniveau an.

Eine vorzugsweise Ausgestaltung besteht darin, daß die abgeleitete Vortrocknersäure in den Säurekreislauf des $SO_3$-Zwischenabsorbers eingeleitet wird. Dadurch wird der $SO_2$-Gehalt, der in der Verschiebesäure aus dem Vortrockner enthalten ist, in die folgende Kontaktstufe geleitet und dort umgesetzt.

Eine Ausgestaltung besteht darin, daß nach der ersten Kontaktstufe vor der Zwischenabsorption ein Teilstrom des $SO_3$-haltigen Gases zunächst durch eine Oleum-Erzeugung geleitet wird, der Teilstrom vor dem Eintritt in den Oleum-Erzeuger im indirekten Wärmeaustausch mit dem aus dem Oleum-Erzeuger austretenden Teilstrom abgekühlt wird, der austretende, aufgeheizte Teilstrom mit dem restlichen $SO_3$-haltigen Gas gemischt und in die Zwischenabsorption geleitet wird. Falls Oleum erzeugt werden soll, wird dadurch die überschüssige Wärme im Gas des Kontaktsystems vergrößert, weil einerseits eine Wärmeübertragung von dem heißem SO$_3$-haltigen Teilstrom an das aus der Oleum-Erzeugung austretende kalte Gas erfolgt und andererseits das restliche SO$_3$-haltige Gas nicht abgekühlt wird. Außerdem wird durch die Verringerung der Temperaturunterschiede der beiden Gasströme vor ihrer Mischung eine Nebelbildung vermieden oder verringert. Der indirekte Wärmeaustausch erfolgt vorzugsweise im Gleichstrom, da dabei die Wandtemperaturen günstiger sind und eine Kondensatbildung vermieden wird.

Eine vorzugsweise Ausgestaltung besteht darin, daß der Teilstrom vor dem Eintritt in den Oleum-Erzeuger auf 120 bis 160 °C abgekühlt und der aus dem Oleum-Erzeuger austretende Teilstrom auf 100 bis 150 °C aufgeheizt wird. Dadurch kann eine beträchtliche Wärmemenge im indirekten Wärmeaustauscher übertragen werden, ohne daß die Gefahr von kondensatbildung eintritt.

Eine vorzugsweise Ausgestaltung besteht darin, daß das nicht in die Oleum-Erzeugung geleitete restliche SO$_3$-haltige Gas den aus der Oleum-Erzeugung austretenden, aufgeheizten Teilstrom zunächst im indirekten Wärmeaustausch weiter aufheizt und dann mit diesem vermischt wird. Durch den Ausgleich der Gastemperaturen vor der Mischung auf indirektem Weg wird eine Nebelbildung bei der Mischung weitgehend vermieden.

Eine vorzugsweise Ausgestaltung besteht darin, daß die Vortrocknung und/oder Trocknung und/oder SO$_3$-Absorption in übereinander angeordneten Stufen im Gegenstrom durchgeführt wird und in die — gasseitig gesehen — erste Stufe 50 bis 80 % der Säure eingeleitet und der Rest in die folgende oder folgenden Stufen eingeleitet wird. Dadurch können die Aggregate kleingehalten werden und die Abstrahlungsverluste sind gering.

Die Erfindung wird anhand von Figuren und Beispielen näher erläutert.

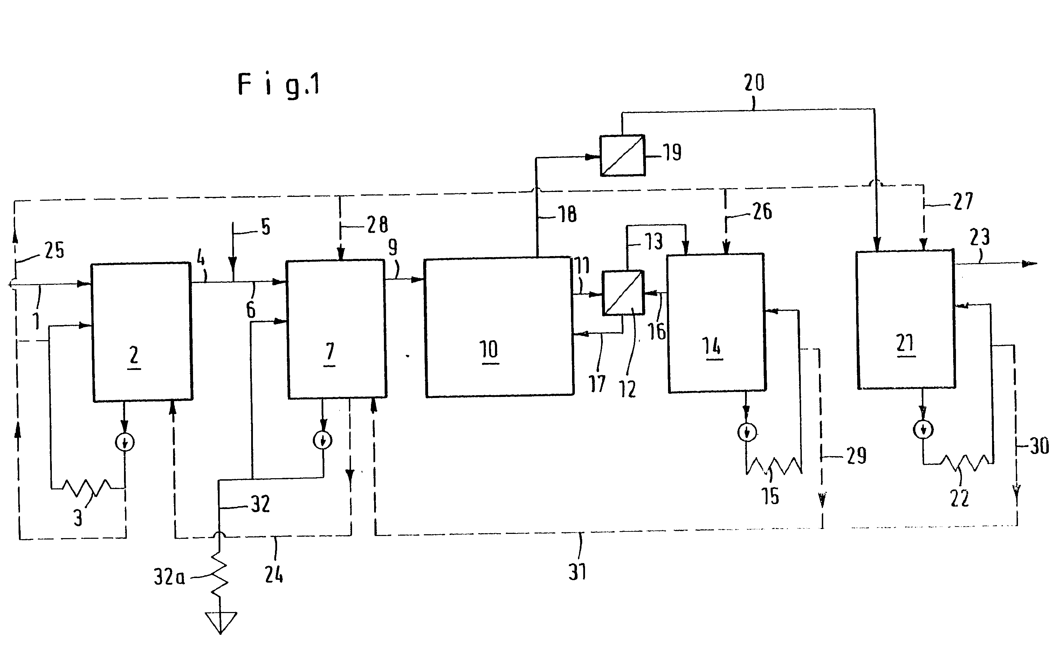

Figur 1 zeigt ein Fließschema, bei dem die SO$_2$-haltigen Gase einen Wassergehalt haben, welcher der Wasserbilanz entspricht. Die Verschiebesäure aus der Vortrocknung wird auf die Trocknung, Zwischenabsorption und Endabsorption verteilt. Die konzentrierte Verschiebesäure wird aus der Zwischen- und Endabsorption entnommen und über den Trockner in die Vortrocknung zurückgeführt. Die Produktion wird aus der Trocknung entnommen ;

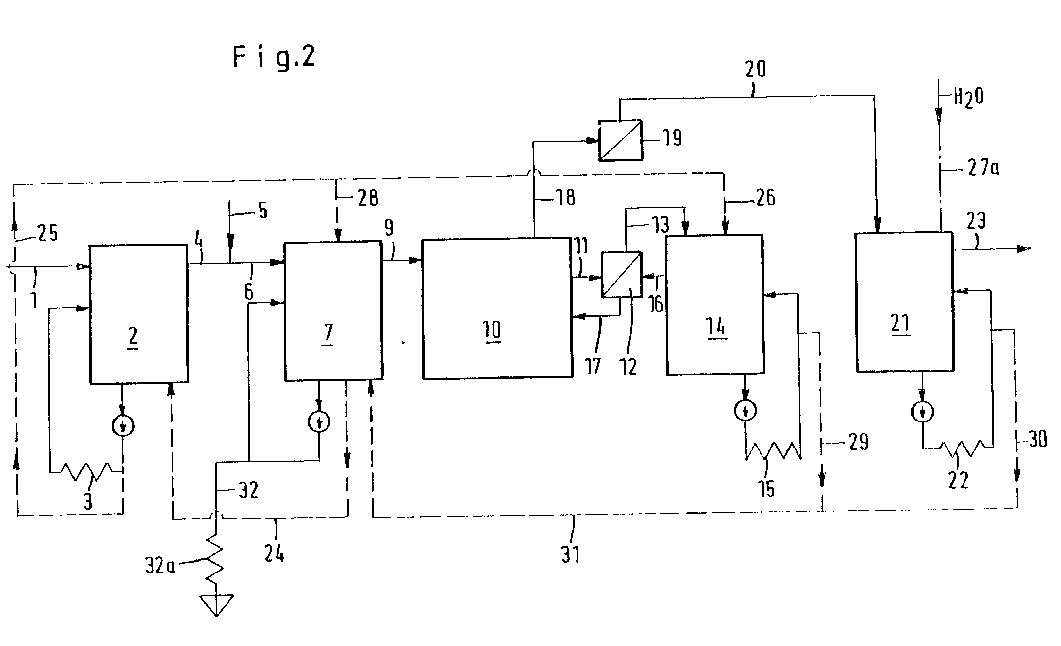

Figur 2 zeigt ein Fließschema, bei dem die SO$_2$-haltigen Gase weniger Wasser enthalten, als für die Wasserbilanz erforderlich ist. Die fehlende Wassermenge wird durch Zugabe von Wasser in die Endabsorption ausgeglichen. Die Verschiebesäure aus der Vortrocknung wird auf die Trocknung und Zwischenabsorption verteilt ;

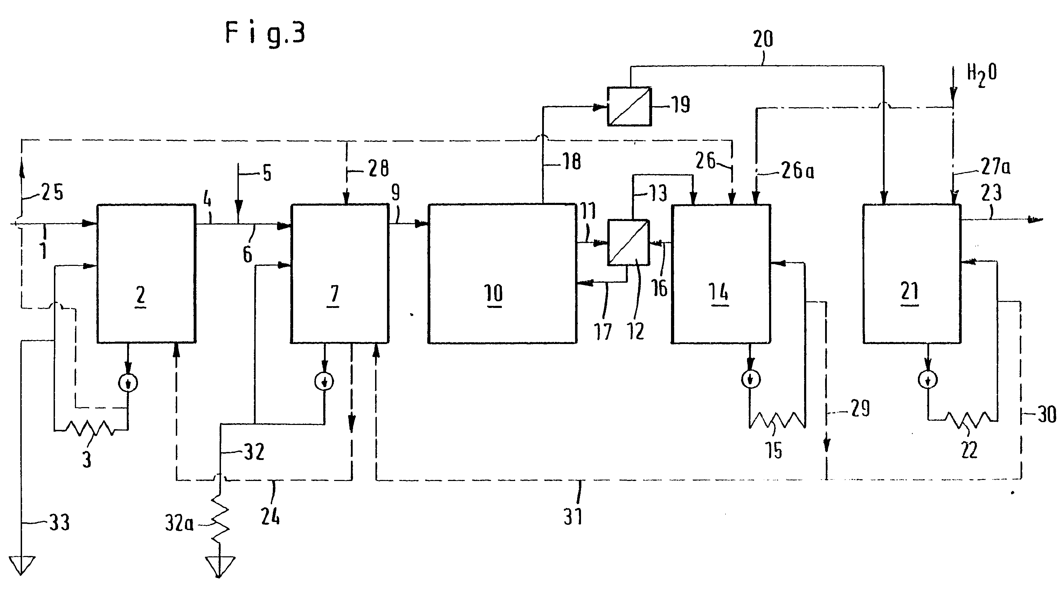

Figur 3 zeigt ein Fließschema, bei dem die SO$_2$-haltigen Gase einen Wassergehalt haben, welcher der Wasserbilanz entspricht, und bei dem verdünnte Säure aus der Vortrocknung als Produktion abgegeben wird. Die dadurch abgeführte Wassermenge wird durch Zugabe von Wasser in die Zwischen- und Endabsorption ausgeglichen. Die Verschiebesäure aus der Vortrocknung wird auf die Trocknung und Zwischenabsorption verteilt ;

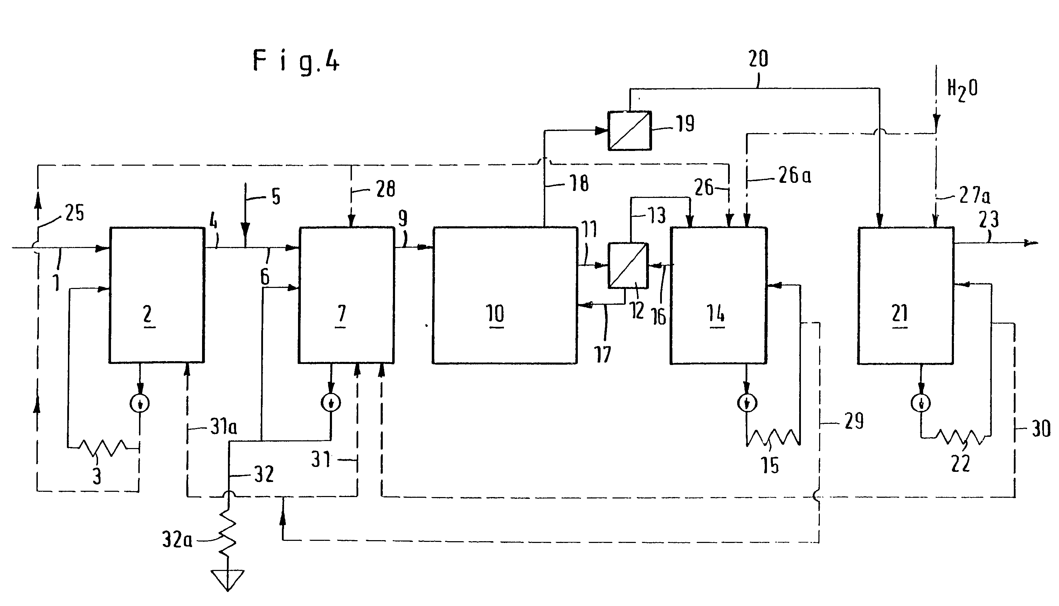

Figur 4 zeigt ein Fließschema, bei dem der Wassergehalt der SO$_2$-haltigen Gase noch geringer ist als in Fig. 2. Die fehlende Wassermenge wird durch Zugabe von Wasser in die Zwischen- und Endabsorption ausgeglichen. Die Verschiebesäure aus der Vortrocknung wird auf die Trocknung und Zwischenabsorption verteilt. Die konzentrierte Verschiebesäure wird zum Teil aus dem Endabsorber in die Trocknung zurückgeführt. Der andere Teil wird aus der Zwischenabsorption zurückgeführt und auf die Trocknung und Vortrocknung aufgeteilt ;

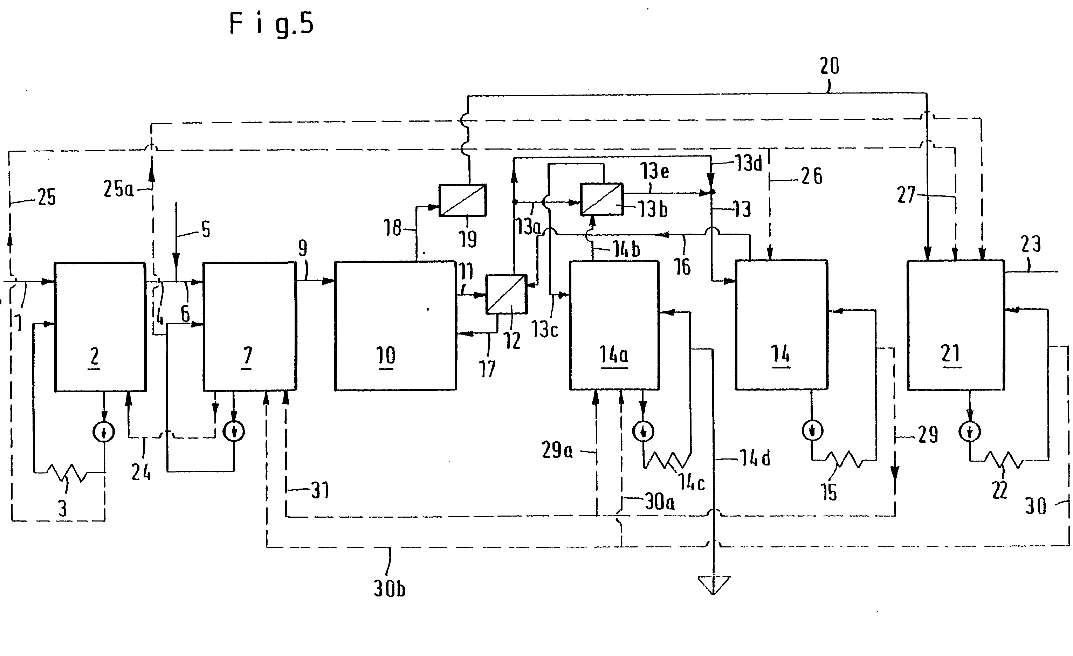

Figur 5 zeigt ein Fließschema mit einer Oleum-Erzeugung. Die SO$_2$-haltigen Gase haben einen Wassergehalt, welcher der Wasserbilanz entspricht. Die Verschiebesäure aus der Vortrocknung wird auf die Zwischen- und Endabsorption verteilt. Die Verschiebesäure wird aus der Endabsorption und aus der Zwischenabsorption über die Trocknung in die Vortrocknung geleitet. Die Produktion wird in Form von Oleum entnommen ;

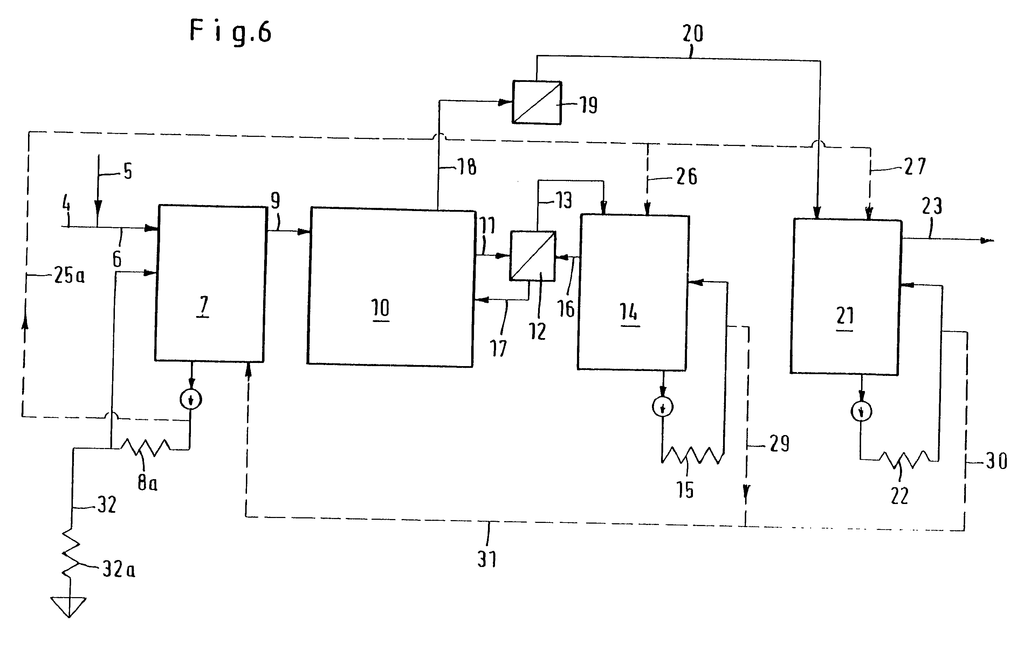

Figur 6 zeigt ein Fließschema, das den Stand der Technik ohne Vortrocknung zeigt. Der Wassergehalt der SO$_2$-haltigen Gase entspricht der Wasserbilanz.

Das SO$_2$-haltige Gas wird über Leitung 1 in die Vortrocknung 2 geleitet. Nach dem Austritt über Leitung 4 wird über Leitung 5 Luft zugemischt, und das Gas über Leitung 6 in die Trocknung 7 geleitet. Über Leitung 9 wird das trockene, SO$_2$-haltige Gas in die Kontaktgruppe 10 geführt. Nach der ersten Kontaktstufe wird das SO$_3$-haltige Gas über Leitung 11 in den Zwischenwärmeaustauscher 12 geleitet, dort abgekühlt und über Leitung 13 in die Zwischenabsorption 14 geleitet. Das von SO$_3$ befreite Gas wird über Leitung 16 in den Zwischenwäremaustauscher 12 geleitet, dort aufgeheizt und über Leitung 17 in die zweite Kontaktstufe geleitet. Über Leitung 18 wird das SO$_3$-haltige Gas in den Wärmeaustauscher 19 geleitet, dort mit Luft, Endgas oder Speisewasser abgekühlt und über Leitung 20 in die Endabsorption 21 geleitet. Das Endgas wird über Leitung 23 abgeführt. Die Säure der Vortrocknung 2 wird über den Wärmeaustauscher 3 im Kreislauf geführt. Ein Teilstrom wird über Leitung 25 als Verschiebesäure abgezogen. Ein Teil wird über Leitung 26 in die Zwischenabsorption 14 und ein Teil über Leitung 28 in die Trocknung 7 geführt bzw. ein Teil wird über Leitung 27 in die Endabsorption 21 geleitet. In Figur 5 wird ein Teilstrom aus dem Säurekreislauf der Trocknung 7 über Leitung 25a als Verschiebesäure abgezogen und in die Endabsorption 21 geführt. In Figur 6 wird dieser Teilstrom über Leitung 26 auf die Zwischenabsorption 14 und über Leitung 27 auf die Endabsorption 21 aufgeteilt. Die Säure der Zwischenabsorption 14 wird über den Wärmeaustauscher 15 im Kreislauf geführt. Ein Teilstrom wird über Leitung 29 als konzentrierte Verschiebesäure abgezogen und über Leitung 31 in der Trocknung 7, in

0 115 880

Figur 4 zum Teil über Leitung 31a in die Vortrocknung 2 und in Figur 5 zum Teil über Leitung 29a in die Oleum-Absorption 14a geführt. Die Säure der Endabsorption 21 wird über den Wärmeaustauscher 22 im Kreislauf geführt. Ein Teilstrom wird als konzentrierte Verschiebesäure über Leitung 30 abgezogen und in die Trocknung 7 zurückgeführt. In Figur 5 wird davon ein Teil über Leitung 30a in die Oleum-Absorption 14a geleitet. Aus der Trocknung 7 wird konzentrierte Verschiebesäure über Leitung 24 in die Vortrocknung 2 geführt (nicht in Figur 4). In Figur 5 ist vor die Zwischenabsorption 14 eine Oleum-Absorption 14a geschaltet. Das $SO_3$-haltige Gas wird nach Verlassen des Wärmeaustauschers 12 zum Teil über Leitung 13a in den Wärmeaustauscher 13b geleitet, dort abgekühlt und über Leitung 13c in den Oleum-Absorber 14a geführt. Das Gas tritt über Leitung 14b aus dem Oleum-Absorber 14a aus, wird im Wärmeaustauscher 13b aufgeheizt, über Leitung 13e mit dem über Leitung 13d geführten Teilstrom vereinigt und über Leitung 13 in die Zwischenabsorption 14 geführt. Die Säure der Oleum-Absorption 14a wird über den Wärmeaustauscher 14c im Kreislauf geführt. Aus dem Säurekreislauf der Trocknung 7 wird über Leitung 32 und Kühler 32a ein Teilstrom als Produktion abgezogen. In Figur 3 wird ein Teilstrom aus dem Säurekreislauf der Vortrocknung 2 als verdünnte Schwefelsäure über Leitung 14d entnommen. In den Figuren 2 bis 4 wird Wasser über Leitung 27a in die Endabsorption bzw. über Leitung 26a in die Zwischenabsorption geleitet. In Figur 6 entfällt die Vortrocknung 2 und die Säure der Trocknung 7 wird über den Kühler 8a Kreislauf geführt.

In der Tabelle entspricht die Numerierung der Ausführungsbeispiele der Numerierung der Figuren.

| | Ausführungsbeispiel | | | | | |
|---|---|---|---|---|---|---|
| | 1 | 2 | 3 | 4 | 5 | 6 |
| **Leitung 1** | | | | | | |
| Volumen, $Nm^3/h$, f. | 59557 | 58985 | 59557 | 56597 | 56598 | -- |
| Temperatur, $^\circ C$ | 46,74 | 45,15 | 46,74 | 36,3 | 36,3 | -- |
| Vol.-% $SO_2$, feucht | 9,08 | 9,17 | 9,077 | 9,552 | 9,552 | -- |
| $H_2O$ im Gas, kg/h | 5272 | 4812 | 5272 | 2892 | 2893 | -- |
| **Vortrocknung 2** | | | | | | |
| $H_2SO_4$-Konz.Gew.-% | 78 | 78 | 78 | 78 | 78 | -- |
| absorb.$H_2O$, kg/h | 5147 | 4687 | 5147 | 2767 | 2768 | -- |
| **Leitung 4** | | | | | | |
| Volumen, $Nm^3/h$, f. | 53155 | 53155 | 53155 | 53155 | 53155 | 59557 |
| Temperatur, $^\circ C$ | 63 | 63 | 63 | 63 | 63 | 46,74 |
| $H_2O$ im Gas, kg/h | 125 | 125 | 125 | 125 | 125 | 5272 |
| **Leitung 5** | | | | | | |
| Volumen, $Nm^3/h$, f. | 7183 | 7183 | 7183 | 7183 | 7183 | 7183 |
| Temperatur, $^\circ C$ | 25 | 25 | 25 | 25 | 25 | 25 |
| $H_2O$ in Luft, kg/h | 147 | 147 | 147 | 147 | 147 | 147 |

(Fortsetzung)

## Leitung 6

| | | | | | |
|---|---|---|---|---|---|
| Volumen, Nm$^3$/h, f. | 60338 | 60338 | 60338 | 60338 | 60338 | 66740 |
| Temperatur, $^o$C | 58,5 | 58,5 | 58,5 | 58,5 | 58,5 | 44,45 |
| $H_2O$ im Gas, kg/h | 272 | 272 | 272 | 272 | 272 | 5419 |

## Trocknung 7

| | | | | | |
|---|---|---|---|---|---|
| $H_2SO_4$-Konz.,Gew.-% | 96 | 96 | 96 | 96 | 96 | 96 |
| absorbiertes $H_2O$ | 272 | 272 | 272 | 272 | 272 | 5419 |

## Leitung 9

| | | | | | |
|---|---|---|---|---|---|
| Volumen, Nm$^3$/h | 60000 | 60000 | 60000 | 60000 | 60000 | 60000 |
| Temperatur, $^o$C | 88 | 86 | 87 | 84 | 82 | 70 |
| Vol.-% $SO_2$ | 9,0 | 9,0 | 9,0 | 9,0 | 9,0 | 9,0 |
| Vol.-% $O_2$ | 9.67 | 9,67 | 9,67 | 9,67 | 9,67 | 9,67 |
| $H_2O$ im Gas, mg/Nm$^3$ | < 50 | < 50 | < 50 | < 50 | < 50 | < 100 |

## Kontaktgruppe 10

| | | | | | |
|---|---|---|---|---|---|
| Umsatz $SO_2$ zu $SO_3$ | | | | | | |
| nach Stufe 1, % | 90,05 | 90,05 | 90,05 | 90,05 | 90,05 | 90,05 |
| nach Stufe 2, % | 99,6 | 99,6 | 99,6 | 99,6 | 99,6 | 99,6 |

## Leitung 11

| | | | | | |
|---|---|---|---|---|---|
| Volumen, Nm$^3$/h | 57324 | 57324 | 57324 | 57324 | 57324 | 57324 |
| Temperatur, oC | 487 | 487 | 487 | 487 | 487 | 487 |
| Vol.-% $SO_3$ | 8,48 | 8,48 | 8,48 | 8,48 | 8,48 | 8,48 |
| $SO_3$ im Gas, kg/h | 17743 | 17743 | 17743 | 17743 | 17743 | 17743 |

## Leitung 13

| | | | | | |
|---|---|---|---|---|---|
| Volumen, Nm$^3$/h | 57324 | 57324 | 57324 | 57324 | 55409 | 57324 |
| Temperatur, $^o$C | 218 | 216 | 218 | 218 | 174 | 218 |
| $SO_3$ im Gas, kg/h | 17743 | 17743 | 17743 | 17743 | 10743 | 17743 |

6

(Fortsetzung)

**Zwischenabsorption 14**

| H₂SO₄-Konz.Gew.-% | 98,5 | 98,5 | 98,5 | 98,5 | 98,5 | 98,5 |
|---|---|---|---|---|---|---|
| absorb. $SO_3$, kg/h | 17743 | 17743 | 17743 | 17743 | 16743 | 17743 |

**Leitung 13a**

| Volumen, $Nm^3$/h | -- | -- | -- | -- | 26050 | -- |
|---|---|---|---|---|---|---|
| Temperatur, °C | - | -- | -- | -- | 218 | -- |
| $SO_3$ im Gas, kg/h | -- | -- | -- | -- | 8063 | -- |

**Leitung 13e**

| Temperatur, °C | -- | -- | -- | -- | 117 | -- |
|---|---|---|---|---|---|---|

**Leitung 13d**

| Volumen, $Nm^3$/h | -- | -- | -- | -- | 31274 | -- |
|---|---|---|---|---|---|---|
| Temperatur, °C | -- | -- | -- | -- | 218 | -- |
| $SO_3$ im Gas, kg/h | -- | -- | -- | -- | 9680 | -- |

**Oleumabsorption 14a**

| Oleumkonz.,% fr.$SO_3$ | -- | -- | -- | -- | 27 | -- |
|---|---|---|---|---|---|---|
| absorb. $SO_3$, kg/h | -- | -- | -- | -- | 7000 | -- |

**Leitung 14b**

| Volumen, $Nm^3$/h | -- | -- | -- | -- | 24135 | -- |
|---|---|---|---|---|---|---|
| Temperatur, °C | -- | -- | -- | -- | 40 | -- |
| $SO_3$ im Gas, kg/h | -- | -- | -- | -- | 1063 | -- |

**Leitung 14d**

| Säuremenge, t/h | -- | -- | -- | -- | 22,671 | -- |
|---|---|---|---|---|---|---|
| Temperatur, °C | -- | -- | -- | -- | 40 | -- |

(Fortsetzung)

Leitung 16

| | | | | | | |
|---|---|---|---|---|---|---|
| Volumen, $Nm^3/h$ | 52463 | 52463 | 52463 | 52463 | 52463 | 52463 |
| Temperatur, $^{\circ}C$ | 100 | 100 | 100 | 100 | 100 | 100 |

Leitung 17

| | | | | | | |
|---|---|---|---|---|---|---|
| Volumen, $Nm^3/h$ | 52463 | 52463 | 52463 | 52463 | 52463 | 52463 |
| Temperatur, $^{\circ}C$ | 420 | 420 | 420 | 420 | 420 | 420 |

Leitung 18

| | | | | | | |
|---|---|---|---|---|---|---|
| Volumen, $Nm^3/h$ | 52202 | 52202 | 52202 | 52202 | 52202 | 52202 |
| Temperatur, $^{\circ}C$ | 278 | 276 | 277 | 274 | 272 | 260 |

Leitung 20

| | | | | | | |
|---|---|---|---|---|---|---|
| Volumen, $Nm^3/h$ | 52202 | 52202 | 52202 | 52202 | 52202 | 52202 |
| Temperatur, $^{\circ}C$ | 150 | 150 | 150 | 150 | 150 | 150 |

Endabsorption 21

| | | | | | | |
|---|---|---|---|---|---|---|
| $H_2SO_4$-Konz.,Gew.-% | 98,5 | 98,5 | 98,5 | 98,5 | 98,5 | 98,5 |
| absorb. $SO_3$, kg/h | 1888 | 1888 | 1888 | 1888 | 1888 | 1888 |

Leitung 23

| | | | | | | |
|---|---|---|---|---|---|---|
| Volumen, $Nm^3/h$ | 51686 | 51686 | 51686 | 51686 | 51686 | 51686 |
| Temperatur, $^{\circ}C$ | 90 | 90 | 90 | 90 | 90 | 90 |

Leitung 32

| | | | | | | |
|---|---|---|---|---|---|---|
| Konzentr.,Gew.-% | 96 | 96 | 96 | 96 | -- | 96 |
| Säuremenge, t/h | 25,05 | 25,05 | 16,7 | 25,05 | -- | 25,05 |
| Temperatur, $^{\circ}C$ | 88 | 86 | 87 | 84 | -- | 70 |

(Fortsetzung)

Leitung 33

| Konzentration,Gew.-% | -- | -- | 78 | -- | -- | -- |
| Säuremenge, t/h | -- | -- | 10,277 | -- | -- | -- |
| Temperatur, °C | -- | -- | 63 | -- | -- | -- |

Leitung 24

| Säuremenge, t/h | 22,3 | 20,31 | 22,304 | -- | 11,995 | -- |
| Temperatur, °C | 88 | 86 | 87 | -- | 82 | -- |

Leitung 25

| Säuremenge, t/h | 27,45 | 24,997 | 17,174 | 13,295 | 14,763 | -- |
| Temperatur, °C | 75 | 75 | 75 | 75,9 | 74,9 | -- |

Leitung 25a

| Säuremenge, t/h | -- | -- | -- | -- | 8,713 | 188,46 |
| Temperatur, °C | -- | -- | -- | -- | 82 | 88,8 |

Leitung 26

| Säuremenge, t/h | 20,773 | 20,773 | 13,723 | 11,547 | 12,577 | 170,33 |
| Temperatur, °C | 75 | 75 | 75 | 75,9 | 74,9 | 88,8 |

Leitung 26a

| $H_2O$-Menge, t/h | -- | -- | 1,467 | 1,92 | -- | -- |
| Temperatur, °C | -- | -- | 20 | 20 | -- | -- |

Leitung 27

| Säuremenge, t/h | 2,21 | -- | -- | -- | 2,186 | 18,13 |
| Temperatur, °C | 75 | -- | -- | -- | 74,9 | 88,8 |

9

(Fortsetzung)

<u>Leitung 27a</u>

| | | | | | | |
|---|---|---|---|---|---|---|
| H$_2$O-Menge, t/h | -- | 0,46 | 0,46 | 0,46 | -- | -- |
| Temperatur, °C | -- | 20 | 20 | 20 | -- | -- |

<u>Leitung 28</u>

| | | | | | | |
|---|---|---|---|---|---|---|
| Säuremenge, t/h | 4,468 | 4,224 | 3,451 | 1,748 | -- | -- |
| Temperatur, °C | 75 | 75 | 75 | 75,9 | -- | -- |

<u>Leitung 29</u>

| | | | | | | |
|---|---|---|---|---|---|---|
| Säuremenge, t/h | 38,516 | 38,516 | 32,933 | 31,21 | 23,32 | 188,076 |
| Temperatur, °C | 100 | 100 | 100 | 100 | 100 | 100 |

<u>Leitung 30</u>

| | | | | | | |
|---|---|---|---|---|---|---|
| Säuremenge, t/h | 4,098 | 2,348 | 2,348 | 2,348 | 12,787 | 20,013 |
| Temperatur, °C | 90 | 90 | 90 | 90 | 90 | 90 |

<u>Leitung 30a</u>

| | | | | | | |
|---|---|---|---|---|---|---|
| Säuremenge, t/h | -- | -- | -- | -- | 2,342 | -- |
| Temperatur, °C | -- | -- | -- | -- | 90 | -- |

<u>Leitung 30b</u>

| | | | | | | |
|---|---|---|---|---|---|---|
| Säuremenge, t/h | -- | -- | -- | -- | 10,445 | -- |
| Temperatur, °C | -- | -- | -- | -- | 90 | -- |

<u>Leitung 31</u>

| | | | | | | |
|---|---|---|---|---|---|---|
| Säuremenge, t/h | 42,614 | 40,864 | 35,281 | 20,682 | 9,991 | 208,089 |
| Temperatur, °C | 99 | 100 | 99 | 100 | 100 | 99 |

(Fortsetzung)

## Wärmeaustauscher 3

| | | | | | | |
|---|---|---|---|---|---|---|
| Säuremenge, t/h | 729,4 | 652,3 | 739,68 | 323,5 | 323,5 | -- |
| Eintrittstemp., °C | 75 | 75 | 75 | 75,9 | 74,9 | -- |
| Austrittstemp., °C | 63 | 63 | 63 | 63 | 63 | -- |
| Wärmemenge, GJ/h | 17,166 | 15,366 | 17,434 | 8,206 | 7,762 | -- |

## Wärmeaustauscher 8a

| | | | | | | |
|---|---|---|---|---|---|---|
| Säuremenge, t/h | -- | -- | -- | -- | -- | 851 |
| Eintrittstemp., °C | -- | -- | -- | -- | -- | 86,8 |
| Austrittstemp., °C | -- | -- | -- | -- | -- | 70 |
| Wärmemenge, GJ/h | -- | -- | -- | -- | -- | 15,037 |

## Wärmenaustauscher 14c

| | | | | | | |
|---|---|---|---|---|---|---|
| Säuremenge, t/h | -- | -- | -- | -- | 375,17 | -- |
| Eintrittstemp., °C | -- | -- | -- | -- | 60,5 | -- |
| Austrittstemp., °C | -- | -- | -- | -- | 40 | -- |
| Wärmemenge, GJ/h | -- | -- | -- | -- | 8,563 | -- |

## Wärmeaustauscher 15

| | | | | | | |
|---|---|---|---|---|---|---|
| Säuremenge, t/h | 443,3 | 443,3 | 437,7 | 436,0 | 329,72 | 592,9 |
| Eintrittstemp., °C | 149,5 | 149,5 | 151,8 | 153,5 | 137,9 | 132 |
| Austrittstemp., °C | 100 | 100 | 100 | 100 | 100 | 100 |
| Wärmemenge, GJ/h | 35,044 | 35,044 | 36,810 | 37,380 | 20,993 | 30,145 |

## Wärmeaustauscher 19
### (Gaswärmeaustauscher)

| | | | | | | |
|---|---|---|---|---|---|---|
| Gasmenge, Nm$^3$/h | 52202 | 52202 | 52202 | 52202 | 52202 | 52202 |
| Eintrittstemp., °C | 278 | 276 | 277 | 274 | 272 | 260 |
| Austrittstemp., °C | 150 | 150 | 150 | 150 | 150 | 150 |
| Wärmemenge GJ/h | 9,210 | 9,069 | 9,140 | 8,919 | 8,780 | 7,913 |

Wärmeaustauscher 22

| | | | | | | |
|---|---|---|---|---|---|---|
| Säuremenge, t/h | 435,3 | 433,6 | 433,6 | 433,6 | 443,98 | 451,2 |
| Eintrittstemp., $^{\circ}$C | 99,5 | 100,5 | 100,5 | 100,5 | 99 | 97,5 |
| Austrittstemp., $^{\circ}$C | 90 | 90 | 90 | 90 | 90 | 90 |
| Wärmemenge, GJ/h | 6,741 | 7,264 | 7,264 | 7,264 | 6,443 | 5,929 |

Wärmeaustauscher 32a

| | | | | | | |
|---|---|---|---|---|---|---|
| Säuremenge, t/h | 25,05 | 25,05 | 16,7 | 25,05 | -- | 25,05 |
| Eintrittstemp., $^{\circ}$C | 88 | 86 | 87 | 84 | -- | 88,8 |
| Austrittstemp., $^{\circ}$C | 40 | 40 | 40 | 40 | -- | 40 |
| Wärmemenge, GJ/h | 1,800 | 1,725 | 1,172 | 1,650 | -- | 1,830 |

| | | | | | | |
|---|---|---|---|---|---|---|
| Gesamt-wärme, GJ/h | 69,961 | 68,468 | 71,820 | 63,419 | 52,561 | 70,854 |
| | ====== | ====== | ====== | ====== | ====== | ====== |

Hochtemperaturwärme

a) gasseitig

Wärmeaust. 19

| | | | | | | |
|---|---|---|---|---|---|---|
| GJ/h | 9,210 | 9,069 | 9,140 | 8,919 | 6,780 | 7,913 |

b) säureseitig

GJ/h

| | | | | | | |
|---|---|---|---|---|---|---|
| Wärmeaust. 15 | 35,044 | 35,044 | 36,810 | 37,380 | 20,993 | 30,145 |
| Wärmeaust. 22 | 6,741 | 7,264 | 7,264 | 7,264 | 6,443 | 5,929 |

Summe a) + b)

| | | | | | | |
|---|---|---|---|---|---|---|
| GJ/h | 50,995 | 51,377 | 53,214 | 53,563 | 36,216 | 43,987 |

Niedrigtemperaturwärme
bei Eintrittstemp.
von 75-88,9$^{\circ}$C und
Austrittstemp. von
40-63$^{\circ}$C;

12

(Fortsetzung)

GJ/h

| | | | | | | |
|---|---|---|---|---|---|---|
| Wärmeaustauscher 3 | 17,166 | 15,366 | 17,434 | 8,206 | 7,762 | -- |
| Wärmeaustauscher 8a | -- | -- | -- | -- | -- | 25,037 |
| Wärmeaustauscher 14c | -- | -- | -- | -- | 8,583 | -- |
| Wärmeaustauscher 32a | 1,300 | 1,725 | 1,172 | 1,650 | -- | 1,830 |
| Summe | 18,966 | 17,091 | 18,606 | 9,856 | 16,345 | 26,867 |

Daraus ergibt sich, daß bei der erfindungsgemäßen Arbeitsweise die auf relativ hohem Temperaturniveau anfallende Wärmemenge genenüber der bekannten Arbeitsweise beträchtlich gesteigert werden kann und selbst bei einer Oleum-Erzeugung noch hoch liegt.

**Patentansprüche**

1. Verfahren zur Herstellung von Schwefelsäure aus $SO_2$-haltigen Gasen nach einer Naßwäsche durch mehrstufige, katalytische Umsetzung von $SO_2$ zu $SO_3$, Zwischenabsorption des gebildeten $SO_3$ nach einer Kontaktstufe, Endabsorption des gebildeten $SO_3$ nach der letzten Kontaktstufe, wobei die feuchten $SO_2$-haltigen Gase mit einem maximal der Wasserbilanz entsprechenden Wassergehalt vor dem Einsatz in die erste Kontaktstufe mit konzentrierter Schwefelsäure getrocknet werden, das von der Trocknersäure absorbierte Wasser durch Einleitung von Trocknersäure in die Absorbersäure der $SO_3$-Absorption überführt und eine entsprechende Menge Absorbesäure in die Trocknung zurückgeführt wird, die Zwischenabsorption als Heißabsorption betrieben wird und überschüssige Wärme aus dem Kontaktsystem verwertet wird, dadurch gekennzeichnet, daß den Gasen vor der Trocknung mit konzentrierter Schwefelsäure in einer Vortrocknung mit verdünnter Schwefelsäure von 40 bis 80 Gew.-% ein Teil ihres Wassergehaltes entzogen wird, mindestens ein Teil des von der Vortrocknersäure aufgenommenen Wassers durch Einleiten von Vortrocknersäure in die Absorbersäure der $SO_3$-Absorption überführt und eine entsprechende Menge Absorbersäure aus der $SO_3$-Absorption in die Vortrocknung zurückgeführt wird.

2. Verfahren nach Anspruch 1, dadurch gekennzeichnet, daß in der Vortrocknung 50 bis 98 % der im Gas enthaltenen Menge an Wasser entfernt werden.

3. Verfahren nach Anspruch 1 oder 2, dadurch gekennzeichnet, daß die Trocknung mit konzentrierter Schwefelsäure ohne Kühlung des Trocknersäure-Kreislaufs erfolgt.

4. Verfahren nach einem der Ansprüche 1 bis 3, dadurch gekennzeichnet, daß Verdünnungsluft zwischen der Vortrocknung und der Trocknung eingeleitet wird.

5. Verfahren nach einem der Ansprüche 1 bis 4, dadurch gekennzeichnet, daß die aus der $SO_3$-Absorption zurückgeführte Absorbersäure zunächst ganz oder teilweise in den Säurekreislauf des Trockners eingeleitet wird und aus dem Säurekreislauf des Trockners die in der Vortrocknung erforderliche Säuremenge zurückgeführt wird.

6. Verfahren nach einem der Ansprüche 1 bis 5, dadurch gekennzeichnet, daß ein Teilstrom der Vortrocknersäure als Produktionssäure abgeführt wird, und eine der in dem Teilstrom abgeführten Wassermenge entsprechende Menge an Wasser in die Säurekreisläufe der $SO_3$-Absorption zugegeben wird.

7. Verfahren nach einem der Ansprüche 1 bis 6, dadurch gekennzeichnet, daß bei einem in Bezug auf die Wasserbilanz zu geringen Wassergehalt der in die Vortrocknung und Trocknung eintretenden Gase die fehlende Menge an Wasser in die Säurekreisläufe der $SO_3$-Absorption zugegeben wird.

8. Verfahren nach einem der Ansprüche 1 bis 7, dadurch gekennzeichnet, daß die abgeleitete Vortrocknersäure in den Säurekreislauf des $SO_3$-Zwischenabsorbers eingeleitet wird.

9. Verfahren nach einem der Ansprüche 1 bis 8, dadurch gekennzeichnet, daß nach der ersten Kontaktstufe vor der Zwischenabsorption ein Teilstrom des $SO_3$-haltigen Gases zunächst durch eine Oleum-Erzeugung geleitet wird, der Teilstrom vor dem Eintritt in den Oleum-Erzeuger im indirekten Wärmeaustausch mit dem aus dem Oleum-Erzeuger austretenden Teilstrom abgekühlt wird, der austretende, aufgeheizte Teilstrom mit dem restlichen $SO_3$-haltigen Gas gemischt und in die Zwischenabsorption geleitet wird.

10. Verfahren nach Anspruch 9, dadurch gekennzeichnet, daß der Teilstrom vor dem Eintritt in den Oleum-Erzeuger auf 120 bis 160 °C abgekühlt und der aus dem Oleum-Erzeuger austretende Teilstrom auf 100 bis 150 °C aufgeheizt wird.

11. Verfahren nach Anspruch 9 oder 10, dadurch gekennzeichnet, daß das nicht in die Oleum-Erzeugung geleitete restliche $SO_3$-haltige Gas den aus der Oleum-Erzeugung austretenden, aufgeheizten Teilstrom zunächst im indirekten Wärmeaustausch weiter aufheizt und dann mit diesem vermischt wird.

13

12. Verfahren nach einem der Ansprüche 1 bis 11, dadurch gekennzeichnet, daß die Vortrocknung und/oder Trocknung und/oder SO₃-Absorption in übereinander angeordneten Stufen im Gegenstrom durchgeführt wird und in die — gas-seitig gesehen — erste Stufe 50 bis 80 % der Säure eingeleitet und der Rest in die folgende oder folgenden Stufen eingeleitet wird.

## Claims

1. A process of producing sulfuric acid from SO₂-containing gases which have been scrubbed, comprising a multistage catalytic reaction of SO₂ to SO₃, an interstage absorption of the resulting SO₃ after one contact process stage, and an end absorption of the resulting SO₃ after the last contact process stage, wherein the SO₂-containing humid gases having a water content which is not in excess of that corresponding to the water balance are dried with concentrated sulfuric acid before entering the first contact process stage, the water that has been absorbed by the dryer acid in transferred with the dryer acid to the absorber acid used to absorb SO₃, absorber acid is recycled at a corresponding rate to the drying stage, the interstage absorption is carried out at elevated temperature and surplus heat from the contact process system is utilized, characterized in that the gases are predried with dilute sulfuric acid having a concentration of 40 to 80 % by weight to remove part of the water content from the gases before they are dried with concentrated sulfuric acid, at least part of the water which has been absorbed by the predryer acid is transferred with said acid to the absorber acid used to absorb SO₃, and absorber acid used to absorb SO₃ is recycled at a corresponding rate to the predryer.

2. A process according to claim 1, characterized in that 50 to 98 % of the water content of the gas are removed in the predryer.

3. A process according to claim 1 or 2, characterized in that drying is effected with concentrated sulfuric acid without a cooling in the dryer acid cycle.

4. A process according to any of claims 1 to 3, characterized in that diluting air is added to the SO₂-containing gases between the predryer and the dryer.

5. A process according to any of claims 1 to 4, characterized in that all or part of the recycled absorber acid used to absorb SO₃ is initially fed to the dryer acid cycle and acid at the rate which is required in the predryer is recycled from the dryer acid cycle.

6. A process according to claims 1 to 5, characterized in that a partial stream of the predryer acid is discharged as product acid and water at the rate at which water is discharged in said partial stream is added to the acid cycles of the SO₃ absorbers.

7. A processs according to any of claims 1 to 6, characterized in that when the gases entering the predryer and the dryer have a water content which is too low to maintain the water balance, the deficient water is added to the acid cycles of the SO₃ absorbers.

8. A process according to any of claims 1 to 7, characterized in that the predryer acid which has been withdrawn is fed to the acid cycle of the interstage SO₃ absorber.

9. A process according to any of claims 1 to 8, characterized in that a partial stream of the SO₃-containing gas obtained in the first contact process stage is passed through an oleum producer before it is fed to the interstage absorber, said partial stream before entering the oleum producer is cooled by an indirect heat exchange with the partial stream leaving the oleum producer, the partial stream which has left the oleum producer and has been reheated is mixed with the remaining SO₃-containing gas and the mixture is fed to the interstage absorber.

10. A process according to claim 9, characterized in that the partial stream is cooled to 120 to 160 °C before entering the oleum producer and the partial stream leaving the oleum producer is reheated to 100 to 150 °C.

11. A process according to claim 9 or 10, characterized in that the remaining SO₃-containing gas which is not fed to the oleum producer is first used to further reheat oy an indirect heat exchange the partial stream which has left the oleum producer and has been reheated, and is then admixed to said partial stream.

12. A process according to any of claims 1 to 11, characterized in that the predrying and/or drying and/or SO₃ absorption are carried out in superimposed stages in countercurrent operations, 50 to 80 % to the acid are fed to the first stage in the gas flow path and the remainder is fed to the following stage or stages.

## Revendications

1. Procédé de préparation d'acide sulfurique à partir de gaz contenant du SO₂, après un lavage par voie humide par conversion catalytique en plusieurs étages de SO₂ en SO₃, par absorption intermédiaire du SO₃ formé après un étage de contact, par absorption finale du SO₃ formé après le dernier étage de contact, les gaz humides, contenant du SO₂ et ayant une teneur en eau correspondant au maximum au bilan en eau, étant séchés, avant l'entrée dans le premier étage de contact, par de l'acide sulfurique concentré qui est transféré par l'eau absorbée par l'acide du séchoir par introduction d'acide du séchoir

14

dans l'acide de l'absorbeur de l'absorption de $SO_3$, une quantité correspondante d'acide de l'absorbeur étant retournée au séchage, l'absorption intermédiaire fonctionnant en absorption à chaud et de la chaleur en excès étant utilisée en dehors du système de contact, caractérisé en ce qu'il consiste à enlever des gaz, avant le séchage, par de l'acide sulfurique concentré, une partie de leur teneur en eau dans un séchage préalable par de l'acide sulfurique dilué de 40 à 80 % en poids, à envoyer au moins une partie de l'eau absorbée par l'acide du séchoir préalable par introduction d'acide du séchoir préalable dans l'acide de l'absorbeur de l'absorption de $SO_3$, et à retourner une quantité correspondante d'acide de l'absorbeur provenant de l'absorption du $SO_3$ au séchage préalable.

2. Procédé suivant la revendication 1, caractérisé en ce qu'il consiste à éliminer dans le séchage préalable de 50 à 98 % de la quantité d'eau contenue dans le gaz.

3. Procédé suivant la revendication 1 ou 2, caractérisé en ce qu'il consiste à effectuer le séchage par de l'acide sulfurique concentré sans refroidissement du circuit d'acide du séchoir.

4. Procédé suivant l'une des revendications 1 à 3, caractérisé en ce qu'il consiste à introduire de l'air de dilution entre le séchage préalable et le séchage.

5. Procédé suivant l'une des revendications 1 à 4, caractérisé en ce qu'il consiste à introduire l'acide de l'absorbeur recyclé, en provenance de l'absorption de $SO_3$, d'abord en tout ou partie dans le circuit d'acide du séchoir et à retourner, à partir du circuit d'acide du séchoir, la quantité d'acide nécessaire au séchage préalable.

6. Procédé suivant l'une des revendications 1 à 5, caractérisé en ce qu'il consiste à évacuer un courant partiel de l'acide du séchoir préalable, à titre d'acide de production, et à ajouter une quantité d'eau, correspondant à la quantité d'eau évacuée dans le courant partiel, aux circuits d'acide de l'absorption de $SO_3$.

7. Procédé suivant l'une des revendications 1 à 6, caractérisé en ce qu'il consiste, dans le cas d'une teneur en eau trop faible par rapport au bilan en eau, à ajouter au gaz entrant dans le séchage préalable et dans le séchage, dans les circuits d'acide de l'absorption du $SO_3$, la quantité d'eau qui fait défaut.

8. Procédé suivant l'une des revendications 1 à 7, caractérisé en ce qu'il consiste à envoyer l'acide du séchoir préalable, qui a été dérivé, dans le circuit d'acide de l'absorbeur intermédiaire de $SO_3$.

9. Procédé suivant l'une des revendications 1 à 8, caractérisé en ce qu'il consiste, après le premier stade de contact et avant l'absorption intermédiaire, à envoyer un courant partiel de gaz contenant du $SO_3$ d'abord dans une production d'oléum, à refroidir le courant partiel avant l'entrée dans l'installation de production d'oléum par échange de chaleur indirecte avec le courant partiel sortant de l'installation de production d'oléum, à mélanger le courant partiel chauffé sortant au gaz restant contenant du $SO_3$, et à l'envoyer à l'absorption intermédiaire.

10. Procédé suivant la revendication 9, caractérisé en ce qu'il consiste à refroidir entre 120 et 160 °C le courant partiel avant l'entrée dans l'installation de production d'oléum, et à chauffer entre 100 et 150 °C le courant partiel sortant de l'installation de production d'oléum.

11. Procédé suivant la revendication 9 ou 10, caractérisé en ce qu'il consiste à chauffer encore, d'abord par échange de chaleur indirecte, le gaz restant contenant du $SO_3$, qui n'est pas envoyé dans l'installation de production d'oléum, par le courant partiel chauffé sortant de l'installation de production d'oléum, puis à le mélanger à celui-ci.

12. Procédé suivant l'une des revendications 1 à 11, caractérisé en ce qu'il consiste à effectuer le séchage préalable et/ou le séchage et/ou l'absorption de $SO_3$ à contre-courant dans les étages superposés et à envoyer dans le premier étage — considéré du côté du gaz — de 50 à 80 % de l'acide et à envoyer le reste dans l'étage suivant ou dans les étages suivants.

Fig.1

Fig.2

# Fig.3

0 115 880

F i g.4

0 115 880

Fig.5

0 115 880

Fig.6